# EUROPÄISCHE PATENTSCHRIFT

(11) **EP 4 434 773 B1**
(45) Veröffentlichungstag und Bekanntmachung des Hinweises auf die Patenterteilung: **28.01.2026**
(21) Anmeldenummer: 24159278.1
(22) Anmeldetag: 23.02.2024
(51) Int. Cl.: B60C 13/00

(54) **FAHRZEUGLUFTREIFEN**
PNEUMATIC TYRE FOR VEHICLES
BANDAGE PNEUMATIQUE POUR VÉHICULE

(30) Priorität: 24.03.2023 DE 102023202673
(43) Veröffentlichungstag der Anmeldung: 25.09.2024
(73) Patentinhaber: Continental Reifen Deutschland GmbH, 30175 Hannover (DE)
(72) Erfinder: Özüduru, Ahmet, 30175 Hannover (DE); Ecke, Stefan, 30175 Hannover (DE); Kuniak, Lubos, 020 01 Púchov (SK)
(74) Vertreter: Continental Corporation

(56) Entgegenhaltungen:
- EP-A1- 2 305 491
- FR-A3- 3 089 453
- JP-A- H11 321 243
- US-A1- 2020 262 252

## Beschreibung

Die Erfindung betrifft einen Fahrzeugluftreifen mit Seitenwänden mit zumindest einem als Kreisringabschnitt gestalteten Umfangsabschnitt mit einer in radialer Richtung vorliegenden Breite von 20,00 mm bis 120,00 mm und mit einem Basisniveau, wobei auf dem Umfangsabschnitt eine Vielzahl von Erhebungen mit einer gegenüber dem Basisniveau des Umfangsabschnitts ermittelten Höhe von bis zu 1,00 mm, ausgebildet ist, wobei die Erhebungen in Draufsicht kreisförmig, in Richtung ihrer Höhe konisch verlaufend gestaltet und regelmäßig verteilt angeordnet sind.

Ein derartiger Fahrzeugluftreifen ist beispielsweise aus der US 2020/0262252 A1 bekannt. Dieser Fahrzugluftreifen weist Seitenwände mit zumindest einem als Kreisringabschnitt gestalteten Umfangsabschnitt mit einem Basisniveau und einer Vielzahl von regelmäßig verteilt angeordneten Erhebungen auf. Die Erhebungen sind in Draufsicht kreisförmig, weisen am Basisniveau einen Durchmesser von 0,30 mm bis 1,00 mm sowie eine gegenüber dem Basisniveau ermittelte Höhe von 0,20 mm bis 0,60 mm auf und sind in Richtung ihrer Höhe konisch verlaufend gestaltet. Die Erhebungen sind beispielsweise in Form von schräg abgeschnittenen Kegelstümpfen ausgebildet und weisen eine entlang der Konusachse verlaufende Aussparung auf, welche unter Aufrechterhaltung einer hohen Steifigkeit der Erhebung für eine Lichtabsorption aus verschiedenen Richtungen sorgt.

Die DE 10 2021 206 642 A1 offenbart einen Fahrzeugluftreifen mit Seitenwänden, auf welchen in einem oder mehreren Umfangsabschnitt(en) zumindest zwei konzentrisch zur Kreisringform der Seitenwand verlaufende Reihen aus in Draufsicht parallelogrammförmigen Erhebungen ausgebildet sind, welche gegenüber dem Basisniveau eine Höhe von 0,80 mm bis 1,50 mm aufweisen. Sowohl zwischen den Erhebungen innerhalb einer Reihe als auch zwischen den benachbarten Reihen sind schmale Zwischenräume vorhanden. In Umfangsrichtung der Seitenwand sind die Reihen von Erhebungen unter gegenseitiger Überlappung gegeneinander versetzt. Die Zwischenräume zwischen den Erhebungen sind von Reihe zu Reihe und ohne miteinander zu fluchten in Umfangsrichtung ebenfalls gegeneinander versetzt. Die Ausgestaltung und Anordnung der Erhebungen ist aerodynamisch ungünstig, verleiht zwar der Seitenwand eine hohe Robustheit, die jedoch vor allem nahe des Laufstreifenbereiches zu Lasten der Flexibilität geht. Gerade in diesem Bereich wird die beim Abrollen des Reifens am Untergrund erforderliche Einfederung und Verformung des Reifens durch das Ausmaß des Gummimaterials in den Erhebungen beeinträchtigt, was sich ungünstig auf den Rollwiderstand des Reifens auswirkt.

Der Erfindung liegt somit die Aufgabe zugrunde, bei einem Fahrzeugluftreifen der eingangs genannten Art die Seitenwände mit Erhebungen derart auszugestalten, dass bei Erhalt einer guten Robustheit eine für einen geringen Rollwiderstand vorteilhafte Flexibilität nahe des Laufstreifenbereiches gewährleistet ist und die aerodynamische Anströmung der Seitenwände beim Fahren verbessert ist.

Gelöst wird die gestellte Aufgabe erfindungsgemäß dadurch, dass die Erhebungen am Basisniveau einen Durchmesser von 2,00 mm bis 6,50 mm aufweisen, wobei bei einer mittigen Teilung des Umfangsabschnitts in einen radial äußeren und einen radial inneren Teilabschnitt die Erhebungen im radial äußeren Teilabschnitt insgesamt 7% bis 20% der Fläche dieses Teilabschnitts und im radial inneren Teilabschnitt insgesamt 25% bis 40% der Fläche dieses Teilabschnitts bedecken.

Die gemäß der Erfindung vorgesehene kreisrunde und konische Gestaltung der Erhebungen ist aerodynamisch besonders von Vorteil, da derartige Erhebungen vorbeiströmender Luft nur einen geringen Widerstand entgegensetzen. Im radial äußeren Teilabschnitt bedecken die Erhebungen einen kleineren Anteil an der Gesamtfläche als im radial inneren Teilabschnitt, sodass im radial äußeren Teilabschnitt entsprechend weniger Gummivolumen durch die Erhebungen vorhanden ist als im radial inneren Teilabschnitt. Dadurch kann sich der Laufstreifen beim Abrollen des Reifens am Untergrund entsprechend verformen, ein geringer Rollwiderstand wird wirkungsvoll unterstützt. Trotzdem wird ein guter Kompromiss hinsichtlich der Stabilität und der Schutzwirkung der Erhebungen auf der Seitenwand, insbesondere auch durch die Erhebungen im radial inneren Teilabschnitt, erzielt.

Gemäß einer bevorzugten Ausführungsform sind die Erhebungen kegelstumpfförmig und mit einer umlaufenden Fläche gestaltet, die relativ zu einer Senkrechten auf das Basisniveau unter einem Winkel von 10° bis 45°, insbesondere von 15° bis 25°, verläuft. Kegelstumpfförmige Erhebungen sind ausgesprochen robust und wenig anfällig für Beschädigungen, beispielsweise beim Anfahren des Reifens an Bordsteinkanten oder dergleichen.

Diesbezüglich und hinsichtlich der Erkennbarkeit der Erhebungen auf der Seitenwand ist es ferner von Vorteil, wenn die Erhebungen eine Höhe von mindestens 0,40 mm und bevorzugt von 0,50 mm bis 0,70 mm, aufweisen.

Dabei weisen sämtliche Erhebungen bevorzugt eine übereinstimmende Höhe auf, unabhängig davon ob sie einen kleineren oder größeren Durchmesser aufweisen. Im radial äußeren Teilabschnitt sind tendenziell vom Durchmesser her wesentlich kleinere Erhebungen oder es ist eine geringere Anzahl an Erhebungen mit etwas größerem Durchmesser vorhanden als im radial inneren Teilabschnitt. Um das erwünschte Einfederungsverhalten im Laufstreifenbereich des Reifens zu unterstützen, ist es darüber hinaus von Vorteil, wenn das von den Erhebungen in Summe eingenommene Gummivolumen im radial äußeren Teilabschnitt um 20% bis 80%, insbesondere um 40% bis 60%, geringer ist als jenes der Erhebungen im radial inneren Teilabschnitt.

Aerodynamisch von Vorteil ist ferner eine möglichst gleichmäßige Anordnung sämtlicher im Umfangsabschnitt vorgesehener Erhebungen, sodass im Umfangsabschnitt Erhebungen mit dem jeweils gewählten kleinsten Durchmesser - diese vorrangig im radial äußeren Teilabschnitt - und Erhebung mit dem jeweils gewählten größten Durchmesser - diese bevorzugt oder vorrangig im radial inneren Teilabschnitt - sowie Erhebungen, deren Durchmesser zwischen dem kleinsten und dem größten Durchmesser liegt, vorhanden sind.

Für eine gleichmäßige Anordnung der Erhebungen ist es ferner von Vorteil, wenn die Erhebungen in einer Vielzahl von in radialer Richtung verlaufenden Reihen angeordnet sind und innerhalb der Reihen unter zwischen ihren Kreismittelpunkten ermittelten Abständen von 0,50 mm bis 8,00 mm verlaufen, wobei vorzugsweise die Abstände innerhalb der Reihen, in sämtlichen Reihen und zwischen den Reihen gleich groß sind und der Zwischenraum zwischen den innerhalb einer Reihe befindlichen Erhebungen eine Breite von mindestens 1,20 mm aufweist.

In diesem Zusammenhang ist es zusätzlich von Vorteil, wenn in den in der Umfangsrichtung des Umfangsabschnitts aufeinanderfolgenden Reihen die Erhebungen in radialer Richtung jeweils zueinander versetzt sind, insbesondere derart, dass sich jeweils eine Erhebung aus der einen Reihe mittig gegenüber zwei in radialer Richtung aufeinanderfolgenden Erhebungen in der anderen, benachbarten Reihe befindet.

Bei einer weiteren aerodynamisch vorteilhaften, gleichmäßigen Anordnung der Erhebungen ist zumindest in einem Teilbereich des Umfangsabschnitt die gegenseitige Anordnung der Erhebungen in den in Umfangsrichtung aufeinanderfolgenden Reihen aus Erhebungen derart ist, dass Verbindungslinien zwischen den Kreismittelpunkten ein Netz aus gleichseitigen Dreiecken bilden, deren Seitenlängen 5,00 mm bis 8,50 mm betragen.

Eine bei Sicht auf die Seitenwand besonders gut sichtbare und optisch ansprechende Anordnung der Erhebungen wird dadurch erzielt, wenn in zumindest einigen der in Umfangsrichtung aufeinanderfolgenden Reihen von Erhebungen die Ausgestaltung und Anordnung der Erhebungen derart aufeinander abgestimmt ist, dass, in Umfangsrichtung des Umfangsabschnitts betrachtet, eine über die Breite des Umfangsabschnitts vorliegende pfeilförmige Anordnung der Erhebungen mit zwei Pfeilschenkeln entsteht, wobei diese pfeilförmige Anordnung insbesondere dann besonders auffallend ist, wenn in jedem Pfeilschenkel jeweils überwiegend, insbesondere zumindest 70%, gleich große Erhebungen vorhanden sind. Diese pfeilförmige Anordnung der Erhebungen bietet sich auch bei Reifen an, die mit einer bestimmten Abrollrichtung bei Vorwärtsfahrt zu montieren sind, um derart die vorgegebene Abrollrichtung zu kennzeichnen, wobei gleichzeitig auch eine besonders vorteilhafte aerodynamische Anströmung der Seitenwand bei Vorwärtsfahrt und höheren Geschwindigkeiten unterstützt wird.

Das von den Erhebungen im Umfangsabschnitt gebildete Muster lässt sich auf der Seitenwand besonders deutlich dadurch hervorheben, dass der Umfangsabschnitt außerhalb der Erhebungen zumindest bereichsweise von einer vom Basisniveau ausgehenden Hintergrundschraffur bedeckt ist, welche aus parallel zueinander oder im Wesentlichen parallel zueinander verlaufenden Mikroerhebungen mit einem dreieckigen oder trapezförmigen Querschnitt besteht, wobei die Mikroerhebungen eine Höhe von 0,25 mm bis 0,35 mm, insbesondere 0,30 mm, und Scheitelbereiche aufweisen, deren gegenseitiger Abstand, zwischen den Mitten benachbarter Scheitel ermittelt, 0,30 mm bis 0,50 mm beträgt.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Querschnitt einer Hälfte eines Fahrzeugluftreifens,
Fig. 2 eine Ansicht eines Umfangsabschnitts einer Seitenwand mit einer Ausführungsform der Erfindung,
Fig. 3 das Detail D aus Fig. 2 in vergrößerter Darstellung,
Fig. 4 eine Schnittdarstellung entlang der Linie IV-IV der Fig. 3 und
Fig. 5 eine Schnittdarstellung entlang der Linie V-V der Fig. 3.

Gemäß der Erfindung ausgeführte Fahrzeugluftreifen sind Reifen für Kraftfahrzeuge, insbesondere für mehrspurige Kraftfahrzeuge, bevorzugt Reifen in Radialbauart für Personenkraftwagen (PKWs), Vans (Transporter), SUVs oder Light-Trucks (leichte LKWs mit zGM ≤ 7,5 t).

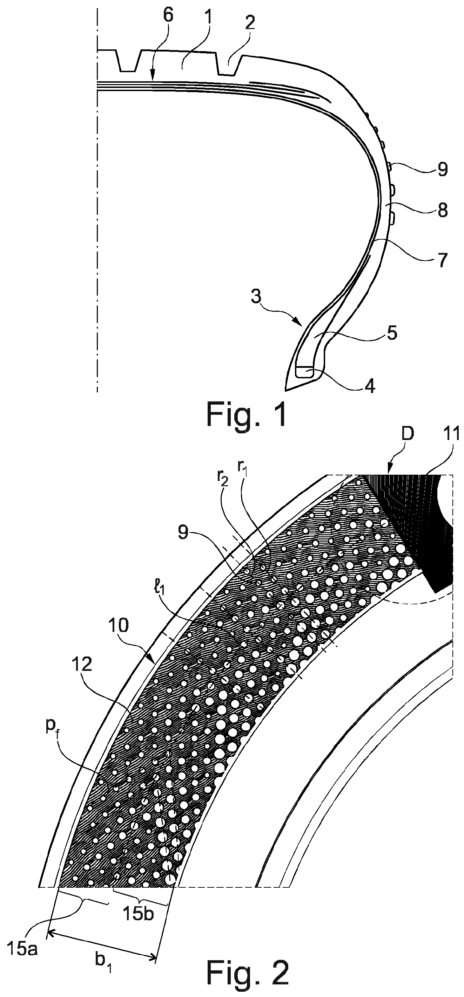

Fig. 1 zeigt beispielhaft und schematisch einen Querschnitt der einen Hälfte eines Fahrzeugluftreifens mit wesentlichen Bestandteilen. Zu diesen Bestandteilen gehören insbesondere ein profilierter Laufstreifen 1, von dessen Profilierung beispielhaft zwei Umfangsrillen 2 dargestellt sind, ferner Wulstbereiche 3 mit Wulstkernen 4 und Kernprofilen 5, ein mehrlagiger Gürtel 6 und eine Karkasseinlage 7, welche von Wulstbereich 3 zu Wulstbereich 3 reichend die Wulstkerne 4 von reifeninnenseitig nach reifenaußenseitig umläuft. Der Fahrzeugluftreifen weist ferner Seitenwände 8 aus einem Gummimaterial auf, die zwischen den Wulstbereichen 3 und dem Laufstreifen 1 verlaufen und relativ dünn ausgeführt sind, um das Gewicht des Fahrzeugluftreifens und damit den Rollwiderstand gering zu halten. Um die Seitenwände 8 gegenüber äußeren Einwirkungen, etwa beim Anfahren von Bordsteinkanten, robuster auszuführen, sind sie, wie anhand der Figuren 2 bis 5 näher erläutert wird, mit einer Vielzahl von in Fig. 1 bezüglich ihrer Dimensionierung übertrieben und schematisch dargestellten Erhebungen 9 versehen.

Fig. 2 zeigt eine Ansicht eines als Kreisringabschnitt dargestellten Umfangsabschnitts 10 auf einer Seitenwand 8 des Fahrzeugluftreifens. Der Umfangsabschnitt 10 bedeckt auf der Seitenwand 8 einen Kreisringabschnitt mit einer Breite b₁ von 20,00 mm bis 120,00 mm, insbesondere 30,00 mm bis 80,00 mm. Ein derartiger Umfangsabschnitt 10 kann in unterschiedlicher Dimensionierung auf der Seitenwand 8 wiederholt ausgebildet sein oder er erstreckt sich im Wesentlichen durchgehend über einen größeren Teil des Umfanges der Seitenwand 8, beispielsweise über drei Viertel des Umfanges. Der Umfangsabschnitt 10 bzw. die Umfangsabschnitte 10 können mit Bezeichnungen, beispielsweise einer Dimensionsbezeichnung des betreffenden Reifens und/oder diversen Symbolen versehen sein, welche die Ausgestaltung mit Erhebungen 9 örtlich überlagern oder unterbrechen. Der dargestellte Umfangsabschnitt 10 endet einseitig bei einem weiteren, abweichend ausgeführten Umfangsabschnitt 11, in welchem beispielsweise der Reifenhersteller oder eine sonstige Bezeichnung des Reifens enthalten ist. Nachdem der Umfangsabschnitt 11 nicht Gegenstand der Erfindung ist wird auf seine Ausgestaltung weiter nicht eingegangen.

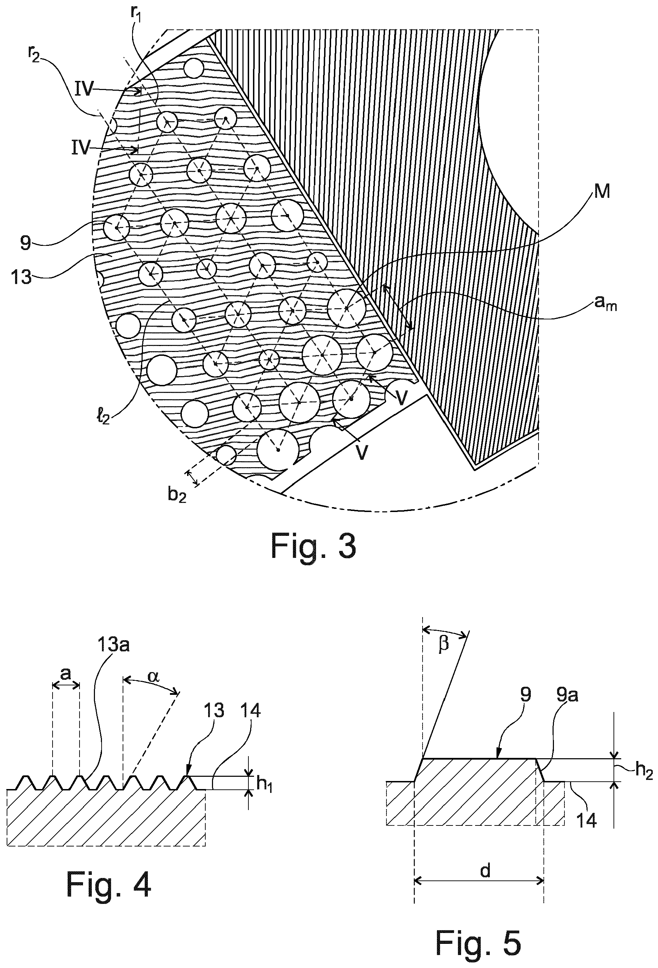

Die Erhebungen 9 unterbrechen bei der dargestellten Ausführung eine den Umfangsabschnitt 10 ansonsten bedeckende und von einem Basisniveau 14 (Fig. 4, Fig. 5) des Umfangsabschnitts 10 ausgehende Hintergrundschraffur 12, von welcher ein beispielhafter Teilquerschnitt in Fig. 4 dargestellt ist. Die Hintergrundschraffur 12 besteht gemäß Fig. 3 aus parallel zueinander oder im Wesentlichen parallel zueinander verlaufenden Mikroerhebungen 13, die - wie Fig. 4 zeigt - einen dreieckigen oder trapezförmigen Querschnitt mit Seitenflanken 13a aufweisen, die unter einem Winkel α von 20° bis 50°, insbesondere von 30°, zu einer Senkrechten auf das Basisniveau 14 verlaufen, eine senkrecht zum Basisniveau 14 ermittelte, bei sämtlichen Mikroerhebungen 13 bevorzugt gleiche Höhe h₁ von 0,25 mm bis 0,35 mm, insbesondere 0,30 mm, aufweisen und deren gegenseitiger Abstand a zwischen den Mitten der Scheitel benachbarter Mikroerhebungen 13 in Abhängigkeit von der Neigung der Seitenflanken 13a 0,30 mm bis 0,60 mm beträgt. Die Mikroerhebungen 13 können geradlinig oder, wie dargestellt, leicht wellenförmig verlaufen (Fig. 3). Bei einer alternativen, nicht gezeigten Ausführung, ist keine Hintergrundschraffur 12 aus Mikroerhebungen 13 vorhanden, sondern es befindet sich am Basisniveau 14 eine zumindest weitgehend glatte Basisfläche.

Sämtliche Erhebungen 9 sind in Draufsicht kreisförmig (Fig. 3) und im Querschnitt, wie in Fig. 5 beispielhaft gezeigt, konisch und insbesondere kegelstumpfförmig gestaltet, mit einer die Erhebungen 9 umlaufenden Fläche 9a, die relativ zu einer Senkrechten auf das Basisniveau 14 unter einem Winkel β von 10° bis 45°, insbesondere von 15° bis 25°, und bevorzugt von 20° verläuft. Sämtliche Erhebungen 9 weisen eine senkrecht zum Basisniveau 14 ermittelte Höhe h₂ auf, welche 0,40 mm bis 1,00 mm, insbesondere 0,50 mm bis 0,70 mm, beträgt und die Höhe h₁ (Fig. 4) der Mikroerhebungen 13 in der Basisschraffur 14 um mindestens 0,10 mm übersteigt. Bei einer bevorzugten Ausführung weisen sämtliche Erhebungen 9 übereinstimmende Höhen h₂ auf, bevorzugt von 0,60 mm. Am Basisniveau 14 beträgt der Durchmesser d der Erhebungen 9 2,00 mm bis 6,50 mm. Wie Fig. 2 und Fig. 3 zeigen, sind sowohl Erhebungen 9 mit dem jeweils gewählten kleinsten Durchmesser d als auch Erhebungen 9 mit dem jeweils gewählten größten Durchmesser d aus diesem Bereich vorhanden, ferner weitere Erhebungen 9, deren Durchmesser d zwischen dem kleinsten und dem größten Durchmesser d liegt.

Wird der Umfangsabschnitt 10 genau mittig in zwei als Kreisringabschnitte gestaltete Teilabschnitte 15a, 15b (Fig. 2) - einem radial äußeren Teilabschnitt 15a und einem radial inneren Teilabschnitt 15b - geteilt, wie es in Fig. 2 durch die Linie l₁ angedeutet ist, so ist die Ausgestaltung und/oder Anordnung der Erhebungen 9 derart, dass die Erhebungen 9, am Basisniveau 14 (Fig. 5) ermittelt und bei einer regelmäßigen oder weitgehend regelmäßigen Verteilung über die jeweilige Fläche des Teilabschnitts 15a, 15b, im radial äußeren Teilabschnitt 15a insgesamt - in Summe über alle Erhebungen 9 betrachtet - eine kleinere Fläche bedecken als im radial inneren Teilabschnitt 15b. Das Ausmaß der jeweiligen Bedeckung ist insbesondere derart, dass im radial äußeren Teilabschnitt 15a die Erhebungen 9 insgesamt 7% bis 20%, insbesondere 12% bis 18%, der Gesamtfläche des Teilabschnitts 15a einnehmen, im radial inneren Teilabschnitt 15b 25% bis 40%, insbesondere 27% bis 35%, der Gesamtfläche des inneren Teilabschnitts 15b. Im radial äußeren Teilabschnitt 15a ist insbesondere das in Summe von den Erhebungen 9 eingenommene Gummivolumen um 20% bis 80%, insbesondere um 40% bis 60%, geringer als jenes der Erhebungen 9 im radial inneren Teilabschnitt 15b.

In der Nähe des Laufstreifens 1 ist daher dafür gesorgt, dass die dort beim Abrollen des Reifen am Untergrund stattfindende Einfederung ungehindert oder nahezu unbeeinflusst stattfinden kann und ein geringerer Rollwiderstand unterstützt wird. Das heißt, der Einfluss der Erhebungen 9 im radial äußeren Teilabschnitt 15a auf den Rollwiderstand ist gering bzw. nahezu vernachlässigbar.

Bevorzugte weitere Anordnungen der Erhebungen 9 im Umfangsabschnitt 11 werden nun anhand der Figuren 2 und 3 näher erläutert. Die Erhebungen 9 sind in einer Vielzahl von in radialer Richtung verlaufenden Reihen angeordnet, wobei in Fig. 2 zwei zueinander benachbart verlaufende Reihen mit gestrichelte Linien r₁ und r₂ gekennzeichnet sind. In sämtlichen Reihen weisen die Erhebungen 9 voneinander gleich große Abstände aₘ (Fig. 3) auf, die von den Kreismittelpunkten M aus vorliegen und 5,0 mm bis 8,50 mm betragen. Der Zwischenraum zwischen den innerhalb einer Reihe befindlichen Erhebungen 9 weist, an der Basis der Erhebungen 9 ermittelt, eine Breite b₂ von mindestens 1,50 mm auf. Dabei sind ferner in den in der Umfangsrichtung des Umfangsabschnitts 10 aufeinanderfolgende Reihen die Erhebungen 9 in radialer Richtung jeweils zueinander versetzt, derart, dass sich jeweils eine Erhebung 9 aus der einen Reihe mittig gegenüber zwei in radialer Richtung aufeinanderfolgenden Erhebungen 9 in der anderen, benachbarten Reihe befindet. Es liegt also in radialer Richtung ein gegenseitiger Versatz von in Umfangsrichtung aufeinanderfolgenden Reihen r₁, r₂ von Erhebungen 9 vor.

Fig. 3 zeigt eine bevorzugte Ausführung der gegenseitigen Anordnung der Reihen aus Erhebungen 9. Durch ein Verbinden der Mittelpunkte M sämtlicher Erhebungen 9 entsteht ein Netz aus gleichseitigen Dreiecken, wie es in Fig. 3 durch gestrichelte Linien l₂ angedeutet ist. Die Seitenlängen dieser Dreiecke sind daher gleich groß und entsprechen dem erwähnten Abstand aₘ, welcher 5,00 mm bis 8,50 mm beträgt.

Fig. 2 zeigt eine weitere bevorzugte Ausführung der Anordnung der Erhebungen 9 im Umfangsabschnitt 10. Die Größen bzw. die Durchmesser d (Fig. 5) der Erhebungen 9 in zumindest einigen der in Umfangsrichtung aufeinanderfolgenden Reihen von Erhebungen 9 werden derart gewählt und aufeinander abgestimmt, dass, in Umfangsrichtung des Umfangsabschnitts 10 betrachtet, eine über die Breite b₁ des Umfangsabschnitts vorliegende pfeilförmige Anordnung von Erhebungen 9 entsteht. Zwei Linien p_{f} versinnbildlichen in Fig. 2 die beiden Pfeilschenkel dieser pfeilförmigen Anordnung bzw. Ausgestaltung. Dieses Erscheinungsbild wird insbesondere dadurch erreicht, dass in jedem Pfeilschenkel (Linie p_{f}) jeweils weitgehend gleich große Erhebungen 9 vorliegen. Diese Ausgestaltung bietet sich auch bei Reifen an, die mit einer bestimmten Abrollrichtung bei Vorwärtsfahrt zu montieren sind, um derart einerseits die vorgegebene Abrollrichtung zu kennzeichnen und andererseits eine besonders vorteilhafte aerodynamische Anströmung der Seitenwand bei Vorwärtsfahrt und höheren Geschwindigkeiten zu unterstützen.

### Bezugszeichenliste

- 1: Laufstreifen
- 2: Umfangsrille
- 3: Wulstbereich
- 4: Wulstkern
- 5: Kernprofil
- 6: Gürtel
- 7: Karkasseinlage
- 8: Seitenwand
- 9: Erhebung
- 9a: Fläche
- 10, 11: Umfangsabschnitt
- 12: Hintergrundschraffur
- 13: Mikroerhebung
- 13a: Seitenfläche
- 14: Basisniveau
- 15a: radial äußerer Teilabschnitt
- 15b: radial innerer Teilabschnitt
- a, aₘ: Abstand
- α, β: Winkel
- b₁, b₂: Breite
- d: Durchmesser
- D: Detail
- h₁, h₂: Höhe
- M: Kreismittelpunkt
- pᵣ: Linie (Pfeilschenkel)
- l₁, l₂: Linie
- r₁, r₂: Linie

## Patentansprüche

1. Fahrzeugluftreifen mit Seitenwänden (8) mit zumindest einem als Kreisringabschnitt gestalteten Umfangsabschnitt (10) mit einer in radialer Richtung vorliegenden Breite (b₁) von 20,00 mm bis 120,00 mm und mit einem Basisniveau (14), wobei auf dem Umfangsabschnitt (10) eine Vielzahl von Erhebungen (9) mit einer gegenüber dem Basisniveau (14) des Umfangsabschnitts (10) ermittelten Höhe (h₂) von bis zu 1,00 mm, ausgebildet ist, wobei die Erhebungen (9) in Draufsicht kreisförmig, in Richtung ihrer Höhe (h₂) konisch verlaufend gestaltet und regelmäßig verteilt angeordnet sind,
**dadurch gekennzeichnet,**
**dass** die Erhebungen (9) am Basisniveau (14) einen Durchmesser (d) von 2,00 mm bis 6,50 mm aufweisen, wobei bei einer mittigen Teilung des Umfangsabschnitts (10) in einen radial äußeren und einen radial inneren Teilabschnitt (15a, 15b) die Erhebungen (9) im radial äußeren Teilabschnitt (15a) insgesamt 7% bis 20% der Fläche dieses Teilabschnitts (15a) und im radial inneren Teilabschnitt (15b) insgesamt 25% bis 40% der Fläche dieses Teilabschnitts (15b) bedecken.

2. Fahrzeugluftreifen nach Anspruch 1, **dadurch gekennzeichnet, dass** die Erhebungen (9) im radial äußeren Teilabschnitt (15a) insgesamt 12% bis 18% der Fläche dieses Teilabschnitts (15a) und im radial inneren Teilabschnitt (15b) insgesamt 27% bis 35% der Fläche dieses Teilabschnitts (15b) bedecken.

3. Fahrzeugluftreifen nach Anspruch 1 oder 2, **dadurch gekennzeichnet, dass** die Erhebungen (9) kegelstumpfförmig und mit einer umlaufenden Fläche (9a) gestaltet sind, die relativ zu einer Senkrechten auf das Basisniveau (14) unter einem Winkel (β) von 10° bis 45°, insbesondere von 15° bis 25°, verläuft.

4. Fahrzeugluftreifen nach einem der Ansprüche 1 bis 3, **dadurch gekennzeichnet, dass** die Höhe (h₂) der Erhebungen (9) mindestens 0,40 mm und bevorzugt 0,50 mm bis 0,70 mm beträgt.

5. Fahrzeugluftreifen nach einem der Ansprüche 1 bis 4, **dadurch gekennzeichnet, dass** im radial äußeren Teilabschnitt (15a) das von den Erhebungen (9) in Summe eingenommene Gummivolumen um 20% bis 80%, insbesondere um 40% bis 60%, geringer ist als jenes der Erhebungen (9) im radial inneren Teilabschnitt (15b).

6. Fahrzeugluftreifen nach einem der Ansprüche 1 bis 5, **dadurch gekennzeichnet, dass** im Umfangsabschnitt (10) Erhebungen (9) mit dem jeweils gewählten kleinsten Durchmesser (d) und Erhebungen (9) mit dem jeweils gewählten größten Durchmesser (d) sowie Erhebungen (9), deren Durchmesser (d) zwischen dem kleinsten und dem größten Durchmesser (d) liegt, vorhanden sind.

7. Fahrzeugluftreifen nach einem der Ansprüche 1 bis 6, **dadurch gekennzeichnet, dass** die Erhebungen (9) in einer Vielzahl von in radialer Richtung verlaufenden Reihen (r₁, r₂) angeordnet sind und innerhalb der Reihen (r₁, r₂) unter zwischen ihren Kreismittelpunkten (M) ermittelten Abständen (aₘ) von 5,0 mm bis 8,50 mm verlaufen, wobei vorzugsweise die Abstände (aₘ) innerhalb der Reihen (r₁, r₂), in sämtlichen Reihen (r₁, r₂) und zwischen den Reihen (r₁, r₂) gleich groß sind und der Zwischenraum zwischen den innerhalb einer Reihe (r₁, r₂) befindlichen Erhebungen (9) eine Breite (b₂) von mindestens 1,20 mm aufweist.

8. Fahrzeugluftreifen nach Anspruch 7, **dadurch gekennzeichnet, dass** in den in der Umfangsrichtung des Umfangsabschnitts (10) aufeinanderfolgenden Reihen (r₁, r₂) die Erhebungen (9) in radialer Richtung jeweils zueinander versetzt sind, insbesondere derart, dass sich jeweils eine Erhebung (9) aus der einen Reihe (r₁, r₂) mittig gegenüber zwei in radialer Richtung aufeinanderfolgenden Erhebungen (9) in der anderen, benachbarten Reihe (r₁, r₂) befindet.

9. Fahrzeugluftreifen nach Anspruch 7 oder 8, **dadurch gekennzeichnet, dass** zumindest in einem Teilbereich des Umfangsabschnitts (10) die gegenseitige Anordnung der Erhebungen (9) in den in Umfangsrichtung aufeinanderfolgenden Reihen (r₁, r₂) aus Erhebungen (9) derart ist, dass Verbindungslinien (l₂) zwischen den Kreismittelpunkten (M) ein Netz aus gleichseitigen Dreiecken bilden, deren Seitenlängen 5,00 mm bis 8,50 mm betragen.

10. Fahrzeugluftreifen nach einem der Ansprüche 7 bis 9, **dadurch gekennzeichnet, dass** in zumindest einigen der in Umfangsrichtung aufeinanderfolgenden Reihen von Erhebungen (9) ihre Ausgestaltung und Anordnung derart aufeinander abgestimmt ist, dass, in Umfangsrichtung des Umfangsabschnitts (10) betrachtet, eine über die Breite (b₁) des Umfangsabschnitts (10) vorliegende pfeilförmige Anordnung von Erhebungen (9) mit zwei Pfeilschenkeln (p_{f}) entsteht.

11. Fahrzeugluftreifen nach Anspruch 10, **dadurch gekennzeichnet, dass** in jedem Pfeilschenkel (p_{f}) jeweils überwiegend, insbesondere zu mindestens 70%, gleich große Erhebungen (9) vorhanden sind.

12. Fahrzeugluftreifen nach einem der Ansprüche 1 bis 11, **dadurch gekennzeichnet, dass** der Umfangsabschnitt (10) außerhalb der Erhebungen (9) zumindest bereichsweise von einer vom Basisniveau (14) ausgehenden Hintergrundschraffur (12) bedeckt ist, welche aus parallel zueinander oder im Wesentlichen parallel zueinander verlaufenden Mikroerhebungen (13) mit einem dreieckigen oder trapezförmigen Querschnitt besteht, wobei die Mikroerhebungen (13) eine Höhe (h₁) von 0,25 mm bis 0,35 mm, insbesondere von 0,30 mm, und Scheitelbereiche aufweisen, deren gegenseitiger Abstand (a), zwischen den Mitten benachbarter Scheitel ermittelt, 0,30 mm bis 0,50 mm beträgt.

## Claims

1. Pneumatic vehicle tyre comprising sidewalls (8) with at least one circumferential portion (10) designed as a circular ring portion and having a width (b₁) in the radial direction of 20.00 mm to 120.00 mm and having a base level (14), a multiplicity of elevations (9) being formed on the circumferential portion (10) with a height (h₂), determined with respect to the base level (14) of the circumferential portion (10), of up to 1.00 mm, the elevations (9) being designed as circular when viewed from above and running conically in the direction of their height (h₂) and being arranged in a regularly distributed manner,
**characterized**
**in that** the elevations (9) have at the base level (14) a diameter (d) of 2.00 mm to 6.50 mm, with the circumferential portion (10) divided in the middle into a radially outer subportion (15a) and a radially inner subportion (15b), the elevations (9) in the radially outer subportion (15a) cover altogether 7% to 20% of the surface area of this subportion (15a) and the elevations in the radially inner subportion (15b) cover altogether 25% to 40% of the surface area of this subportion (15b).

2. Pneumatic vehicle tyre according to Claim 1, **characterized in that** the elevations (9) in the radially outer subportion (15a) cover altogether 12% to 18% of the surface area of this subportion (15a) and the elevations in the radially inner subportion (15b) cover altogether 27% to 35% of the surface area of this subportion (15b).

3. Pneumatic vehicle tyre according to Claim 1 or 2, **characterized in that** the elevations (9) are in the form of a truncated cone and have a circumferential surface area (9a) which runs relative to a perpendicular to the base level (14) at an angle (β) of 10° to 45°, in particular of 15° to 25°.

4. Pneumatic vehicle tyre according to any one of Claims 1 to 3, **characterized in that** the height (h₂) of the elevations (9) is at least 0.40 mm and preferably 0.50 mm to 0.70 mm.

5. Pneumatic vehicle tyre according to any one of Claims 1 to **4, characterized in that**, in the radially outer subportion (15a), the rubber volume occupied in total by the elevations (9) is 20% to 80%, in particular 40% to 60%, smaller than that of the elevations (9) in the radially inner subportion (15b).

6. Pneumatic vehicle tyre according to any one of Claims 1 to 5, **characterized in that**, in the circumferential portion (10), there are elevations (9) with the respectively selected smallest diameter (d) and elevations (9) with the respectively selected largest diameter (d) and elevations (9), the diameter (d) of which is between the smallest and the largest diameter (d).

7. Pneumatic vehicle tyre according to any one of Claims 1 to 6, **characterized in that** the elevations (9) are arranged in a multiplicity of rows (r₁, r₂) running in the radial direction and run within the rows (r₁, r₂) at distances (aₘ) determined between their circle centre points (M) of 5.0 mm to 8.50 mm, the distances (aₘ) within the rows (r₁, r₂), in all rows (r₁, r₂) and between the rows (r₁, r₂) preferably being equal in size and the intermediate space between the elevations (9) located within a row (r₁, r₂) having a width (b₂) of at least 1.20 mm.

8. Pneumatic vehicle tyre according to Claim 7, **characterized in that**, in the rows (r₁, r₂) following one another in the circumferential direction of the circumferential portion (10), the elevations (9) are each offset in the radial direction to one another, in particular in such a way that in each case one elevation (9) from the one row (r₁, r₂) is located in the middle in relation to two elevations (9) following one another in the radial direction in the other, adjacent row (r₁, r₂).

9. Pneumatic vehicle tyre according to Claim 7 or 8, **characterized in that**, at least in a subregion of the circumferential portion (10), the mutual arrangement of the elevations (9) in the rows (r₁, r₂) of elevations (9) following one another in the circumferential direction is such that connecting lines (l₂) between the circle centre points (M) form a network of equilateral triangles, the side lengths of which are 5.00 mm to 8.50 mm.

10. Pneumatic vehicle tyre according to any one of Claims 7 to 9, **characterized in that**, in at least some of the rows of elevations (9) following one another in the circumferential direction, the design and arrangement of said elevations is matched to one another in such a way, that, when viewed in the circumferential direction of the circumferential portion (10), an arrow-shaped arrangement of elevations (9) present over the width (b₁) of the circumferential portion (10) and having two arrow legs (p_{f}) arises.

11. Pneumatic vehicle tyre according to Claim 10, **characterized in that** elevations (9) of equal size are present in each arrow leg (p_{f}), in each case predominantly, in particular to at least 70%.

12. Pneumatic vehicle tyre according to any one of Claims 1 to 11, **characterized in that** the circumferential portion (10) outside the elevations (9) is at least partially covered by a background hatching (12) which starts from the base level (14) and consists of micro-elevations (13) which run parallel to one another or substantially parallel to one another and have a triangular or trapezoidal cross section, wherein the micro-elevations (13) have a height (h₁) of 0.25 mm to 0.35 mm, in particular of 0.30 mm, and vertex regions, the mutual distance (a) of which, determined between the centres of adjacent vertices, is 0.30 mm to 0.50 mm.

## Revendications

1. Pneumatique de véhicule avec des flancs (8) avec au moins une section périphérique (10) conçue comme une section annulaire circulaire avec une largeur (b₁), présente dans le sens radial, de 20,00 mm à 120,00 mm et avec un niveau de base (14), une pluralité de parties surélevées (9) avec une hauteur (h₂) allant jusqu'à 1,00 mm, déterminée par rapport au niveau de base (14) de la section périphérique (10), étant formée sur la section périphérique (10), les parties surélevées (9) étant conçues avec une forme circulaire dans la vue en plan, de manière à s'étendre de manière conique dans le sens de leur hauteur (h₂) et étant disposées avec une répartition régulière,
**caractérisé en ce**
**que** les parties surélevées (9) présentent sur le niveau de base (14) un diamètre (d) de 2,00 mm à 6,50 mm, dans le cas d'une division centrale de la section périphérique (10) en une section partielle radialement extérieure et une section partielle radialement intérieure (15a, 15b), les parties surélevées (9) couvrant dans la section radialement extérieure (15a) au total 7 % à 20 % de la surface de ladite section partielle (15a) et dans la section radialement intérieure (15b) au total 25 % à 40 % de la surface de ladite section partielle (15b).

2. Pneumatique de véhicule selon la revendication 1, **caractérisé en ce que** les parties surélevées (9) couvrent, dans la section partielle radialement extérieure (15a) au total 12 % à 18 % de la surface de ladite section partielle (15a) et, dans la section partielle radialement intérieure (15b), au total 27 % à 35 % de la surface de ladite section partielle (15b).

3. Pneumatique de véhicule selon la revendication 1 ou 2, **caractérisé en ce que** les parties surélevées (9) sont conçues avec une forme tronconique et avec une surface périphérique (9a) qui s'étend par rapport à une verticale sur le niveau de base (14) selon un angle (β) de 10 à 45°, en particulier de 15° à 25°.

4. Pneumatique de véhicule selon l'une des revendications 1 à 3, **caractérisé en ce que** la hauteur (h₂) des parties surélevées (9) est au moins de 0,40 mm et va de manière préférée de 0,50 mm à 0,70 mm.

5. Pneumatique de véhicule selon l'une des revendications 1 à 4, **caractérisé en ce que**, dans la section partielle radialement extérieure (15a), le volume total de caoutchouc absorbé par les parties surélevées (9) est inférieur de 20 % à 80 %, en particulier de 40 % à 60 %, à celui des parties surélevées (9) dans la section partielle radialement intérieure (15b).

6. Pneumatique de véhicule selon l'une des revendications 1 à 5, **caractérisé en ce que** sont présentes, dans la section périphérique (10), des parties surélevées (9) avec le plus petit diamètre respectivement sélectionné (d) et des parties surélevées (9) avec le plus grand diamètre respectivement sélectionné (d) et des parties surélevées (9), dont le diamètre (d) est compris entre le plus petit et le plus grand diamètre (d).

7. Pneumatique de véhicule selon l'une des revendications 1 à 6, **caractérisé en ce que** les parties surélevées (9) sont disposées en une pluralité de rangées (r₁, r₂) s'étendant dans la direction radiale et s'étendent à l'intérieur des rangées (r₁, r₂) à des distances (aₘ) de 5,0 mm à 8,50 mm déterminées entre leurs centres de cercle (M), les distances (aₘ) à l'intérieur des rangées (r₁, r₂), dans toutes les rangées (r₁, r₂) et entre les rangées (r₁, r₂) étant de préférence identiques et l'espace intermédiaire entre les parties surélevées (9) se trouvant à l'intérieur d'une rangée (r₁, r₂) présentant une largeur (b₂) d'au moins 1,20 mm.

8. Pneumatique de véhicule selon la revendication 7, **caractérisé en ce que** dans les rangées (r₁, r₂) se suivant les unes les autres dans la direction périphérique de la section périphérique (10), les parties surélevées (9) sont respectivement décalées les unes par rapport aux autres dans la direction radiale de telle manière qu'une partie surélevée (9) d'une rangée (r₁, r₂) se trouve au centre par rapport à deux parties surélevées (9) se suivant l'une l'autre dans la direction radiale dans l'autre rangée adjacente (r₁, r₂).

9. Pneumatique de véhicule selon la revendication 7 ou 8, **caractérisé en ce que** la disposition mutuelle des parties surélevées (9) dans les rangées (r₁, r₂) de parties surélevées (9) se suivant les unes les autres dans la direction périphérique est telle au moins dans une zone partielle de la section périphérique (10) que des lignes de liaison (l₂) entre les centres de cercle (M) forment un réseau de triangles équilatéraux dont les longueurs de côté vont de 5,00 mm à 8,50 mm.

10. Pneumatique de véhicule selon l'une des revendications 7 à 9, **caractérisé en ce que** dans au moins certaines des rangées de parties surélevées (9) se suivant les unes les autres dans la direction périphérique, leur configuration et leur disposition sont adaptées entre elles de telle manière qu'il résulte, vu dans la direction périphérique de la section périphérique (10), une disposition en forme de flèche, présente sur la largeur (b₁) de la section périphérique (10), de parties surélevées (9) avec deux branches de flèche (p_{f}).

11. Pneumatique de véhicule selon la revendication 10, **caractérisé en ce que** des parties surélevées (9) de taille identique sont présentes dans chaque branche de flèche (p_{f}) respectivement de manière prédominante, en particulier à hauteur d'au moins 70 %.

12. Pneumatique de véhicule selon l'une des revendications 1 à 11, **caractérisé en ce que** la section périphérique (10) à l'extérieur des parties surélevées (9) est recouverte au moins par endroits d'une hachure de fond (12) partant du niveau de base (14), laquelle est constituée de microparties surélevées (13) parallèles entre elles ou sensiblement parallèles entre elles avec une section transversale triangulaire ou trapézoïdale. les microparties surélevées (13) présentant une hauteur (h₁) de 0,25 mm à 0,35 mm, en particulier de 0,30 mm, et des zones de sommet, dont l'espacement mutuel (a), déterminé entre les centres de sommets adjacents, va de 0,30 mm à 0,50 mm.
